# EUROPÄISCHE PATENTSCHRIFT

(11) **EP 3 754 243 B1**
(45) Veröffentlichungstag und Bekanntmachung des Hinweises auf die Patenterteilung: **26.04.2023**
(21) Anmeldenummer: 20158647.6
(22) Anmeldetag: 21.02.2020
(51) Int. Cl.: F16P 3/14, G01V 8/20

(54) **VORRICHTUNG ZUR SICHERUNG EINES GEFAHRENBEREICHS**
DEVICE FOR SECURING A DANGEROUS AREA
DISPOSITIF DE SÉCURISATION D'UNE ZONE DANGEREUSE

(30) Priorität: 17.06.2019 DE 202019103376 U
(43) Veröffentlichungstag der Anmeldung: 23.12.2020
(73) Patentinhaber: Leuze electronic GmbH + Co. KG, 73277 Owen/Teck (DE)
(72) Erfinder: Rohbeck, Volker, 85244 Röhrmoos (DE); Eder, Alexander, 86928 Hofstetten (DE); Rauscher, Thorsten, 81379 München (DE); Debus, Oliver, 86842 Türkheim (DE)
(74) Vertreter: Ruckh, Rainer Gerhard

(56) Entgegenhaltungen:
- EP-A1- 1 873 442
- EP-A1- 2 108 879
- EP-A1- 3 399 223
- EP-A2- 1 329 662
- EP-B1- 2 108 879
- DE-A1-102007 033 766
- DE-A1-102008 050 943
- DE-A1-102010 024 611
- DE-B4-102007 033 766

## Beschreibung

Die Erfindung betrifft eine Vorrichtung zur Sicherung eines Gefahrenbereichs.

Derartige Vorrichtungen werden im Bereich der Sicherheitstechnik eingesetzt und umfassen generell einen Lichtvorhang bzw. ein Lichtgitter mit einer Mehrfachanordnung von Sender-Empfänger-Paaren. Mit dem Lichtvorhang erfolgt eine Gefahrenbereichsüberwachung an einer Maschine oder dergleichen.

Ein für derartige Überwachungsaufgaben eingesetztes Lichtgitter ist aus der DE 299 20 715 U1 bekannt. Das Lichtgitter umfasst eine Mehrfachanordnung von Lichtschranken. Wird mit diesem Lichtgitter ein Objekt oder eine Person detektiert, wird in dem Lichtgitter eine Objektmeldung generiert, welche zum Abschalten der Maschine führt. Dadurch erfüllt das Lichtgitter seine Sicherheitsfunktion, das mit diesem erfasst wird, wenn sich eine Person in den Gefahrenbereich begibt. Jedoch würde auch ein Eindringen eines mit der Maschine zu bearbeitenden Werkstücks in den Gefahrenbereich zu einer Objektmeldung in dem Lichtgitter führen, welches dann ein Abschalten der Maschine zur Folge hätte. Da es sich bei dem zu bearbeitenden Werkstück um ein nicht sicherheitskritisches Objekt handelt, ist ein Abschalten der Maschine bei dessen Detektion innerhalb des Gefahrenbereichs unnötig und daher unerwünscht.

Um ein derartiges unnötiges Abschalten der Maschine zu vermeiden, sind bei dem Lichtgitter der DE 299 20 715 U1 zusätzlich zu der Lichtschrankenanordnung am Eingang beziehungsweise Ausgang des Gefahrenbereichs Muting-Sensoren vorgesehen, die eine Unterscheidung zwischen Personen oder allgemein sicherheitskritischen Objekten und zulässigen Objekten als nicht sicherheitskritischen Objekten ermöglichen. Wird ein zulässiges Objekt detektiert, so erzeugen die Muting-Sensoren ein Muting-Signal, das heißt ein Überbrückungssignal, das bewirkt, dass trotz einer Unterbrechung der Lichtschranken des Lichtgitters die Abschaltfunktion vorübergehend deaktiviert ist, das heißt die Maschine nicht abgeschaltet wird. Wird hingegen eine der Lichtschranken unterbrochen und erzeugen die Muting-Sensoren kein Überbrückungssignal, so wird die zu überwachende Maschine abgeschaltet.

Typischerweise werden zulässige Objekte, wie z. B. zu bearbeitende Gegenstände der Maschine, auf einer Transporteinrichtung mit einer vorgegebenen Fördergeschwindigkeit zugeführt.

Entsprechend der bekannten Fördergeschwindigkeit wird nach Erfassen des zulässigen Objekts, insbesondere mittels der Muting-Sensoren, das Muting, d. h. die Stummschaltung des Lichtvorhangs für ein vorgegebenes Muting-Zeitintervall aufrechterhalten, so dass innerhalb dieses Muting-Zeitintervalls das zulässige Objekt den Lichtvorhang passieren und der Maschine zugeführt werden kann, ohne dass der Lichtvorhang hierbei ein unnötiges Sicherheitssignal generiert, das zum Abschalten der Maschine führt.

Jedoch kann es vorkommen, dass, beispielsweise aufgrund von Betriebsstörungen, die Transporteinrichtung gestoppt wird. Das zulässige Objekt kann dann im Bereich des Lichtvorhangs stehen bleiben. Läuft dann das Muting-Zeitintervall ab, übernimmt der Lichtvorhang wieder seine Überwachungsfunktion, und erkennt das zulässige Objekt als sicherheitsrelevanten Objekteingriff, wodurch der Lichtvorhang das Sicherheitssignal generiert, das zum Abschalten der Maschine führt, obwohl keine Gefahrensituation vorliegt.

Dieses Problem könnte dadurch umgangen werden, dass das Muting-Zeitintervall sehr groß, beispielsweise mehrere Stunden dauernd, gewählt wird.

Eine derartige Vergrößerung des Muting-Zeitintervalls vergrößert jedoch die Gefahr von Manipulationen durch das Bedienpersonal. Ist beispielsweise durch ein zulässiges Objekt nur der untere Bereich des Lichtvorhangs blockiert, so kann eine Person über das zulässige Objekt steigen, um sich Zugang zur Maschine zu verschaffen. Der Lichtvorhang generiert dabei kein Sicherheitssignal, da er stummgeschaltet ist. Die Person kann somit ungehindert in den Gefahrenbereich der im Betrieb befindlichen Maschine gelangen, wodurch ein erhebliches Sicherheitsrisiko entsteht.

Die DE 10 2007 033 766 A1 betrifft ein Lichtgitter, welches zur Erfassung von Objekten in einem Überwachungsbereich dient und eine Anzahl von Stahlachsen, welche jeweils von einem Sendelichtstrahlen emittierenden Sender und einem zugeordneten Empfänger gebildet sind, umfasst. Bei freiem Überwachungsbereich sind die Strahlachsen nicht unterbrochen und bei einem Objekteingriff ist im Überwachungsbereich wenigstens eine Strahlachse unterbrochen. Weiterhin umfasst das Lichtgitter eine Auswerteeinheit, mittels derer bei Eindringen eines sicherheitskritischen Objekts in den Überwachungsbereich eine Objektmeldung generierbar ist. In der Auswerteeinheit ist ein nichtsicherheitskritisches Objekt bei Passieren des Überwachungsbereichs dadurch identifizierbar, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind. Bei einem identifizierten nichtsicherheitskritischen Objekt wird in der Auswerteeinheit ein Mutingsignal generiert.

Der Erfindung liegt die Aufgabe zugrunde, eine Vorrichtung der eingangs genannten Art bereitzustellen, welche eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft eine Vorrichtung zur Sicherung eines Gefahrenbereichs mit einem Lichtvorhang. Sie umfasst eine Anzahl von Strahlachsen ausbildenden Sender-Empfänger-Paaren mit jeweils einem Lichtstrahlen emittierenden Sender und einem Lichtstrahlen empfangenden Empfänger sowie eine Auswerteeinheit. In dieser ist bei Unterbrechung wenigstens einer Strahlachse ein Sicherheitssignal generierbar. Die Vorrichtung umfasst eine Muting-Steuereinheit, mittels derer ein Stummschalten des Lichtvorhangs derart durchführbar ist, dass während eines durch einen Muting-Timer vorgegebenen Muting-Zeitinterwalls ein zulässiges Objekt den Lichtvorhang passieren kann, ohne dass dieser das Sicherheitssignal generiert. Weiter sind Steuermittel vorgesehen, mittels derer ein Steuersignal generierbar ist, mittels dessen der Muting-Timer angehalten ist und mittels dessen ein Einlernen eines Blanking-Musters im Lichtvorhang initiiert ist, welches für alle Strahlachsen den aktuellen Status angibt, ob diese unterbrochen sind oder nicht. Nachfolgend wird im Lichtvorhang ein Sicherheitssignal generiert, falls für wenigstens eine Strahlachse eine Abweichung von dem Blanking-Muster registriert wird.

Die erfindungsgemäße Vorrichtung dient generell zur Sicherung eines Gefahrenbereichs an einer Maschine, von welcher gefahrbringende Bewegungen ausgehen können.

Die Vorrichtung bildet dabei eine sicherheitstechnische Einrichtung mit der Gefährdungen für Personen vermieden werden. Hierzu weist die Vorrichtung einen Lichtvorhang auf, mit dem der Zugang zu dem Gefahrenbereich abgesichert wird.

Der Lichtvorhang umfasst eine Mehrfachanordnung von Strahlachsen bildenden Sender-Empfänger-Paaren, die jeweils einen Lichtstrahlen emittierenden Sender und einen Lichtstrahlen empfangenden Empfänger aufweisen, sowie eine Auswerteeinheit zur Auswertung von Empfangssignalen der Empfänger. In der Auswerteeinheit wird abhängig von diesen Empfangssignalen ein binäres Schaltsignal generiert, dessen Schaltzustände angeben, ob sich ein Objekt in dem vom Lichtvorhang überwachten Überwachungsbereich befindet oder nicht. Ein freier Überwachungsbereich liegt vor, wenn die Lichtstrahlen aller Sender ungehindert zum zugeordneten Empfänger der Sender-Empfänger-Paare gelangen. Bei einem Objekteingriff in den Überwachungsbereich ist wenigstens eine der Strahlachsen unterbrochen. Das dann generierte Schaltsignal mit dem Schaltzustand "Objekt vorhanden" bildet das Sicherheitssignal mit dem generell eine Sicherheitsfunktion ausgelöst wird. Vorzugsweise führt das Sicherheitssignal zum Abschalten der Maschine. Hierzu wird das Sicherheitssignal in eine die Maschine steuernde Sicherheitssteuerung eingelesen, die die Maschine abschaltet.

Zur Erfüllung der normativen Sicherheitsanforderungen weist die Sicherheitssteuerung einen fehlersicheren, vorzugsweise redundanten Aufbau auf. Weiterhin ist der Lichtvorhang als Sicherheitssensor ausgebildet. Dessen fehlersicherer Aufbau wird durch eine redundant, zweikanalige Auswerteeinheit erhalten.

Die so ausgebildete Sicherheitseinrichtung verhindert, dass Gefahrenzustände von der Maschine ausgehen.

Um die Verfügbarkeit der Maschine zu erhöhen, d. h. um ein unnötiges Abschalten der Maschine zu verhindern, ist die Muting-Steuereinheit vorgesehen. Mit dieser Muting-Steuereinheit erfolgt eine Überbrückung, d. h. ein Stummschalten (Muting) des Lichtvorhangs, um zu gewährleisten, dass ein zulässiges, d. h. nicht gefahrbringendes Objekt den Lichtvorhang passieren kann, ohne dass dieser das Sicherheitssignal generiert.

Zulässige Objekte, wie z. B. Werkstücke, werden bevorzugt auf einer Transporteinrichtung der Maschine zugeführt. Entsprechend der Fördergeschwindigkeit der Transporteinrichtung wird mittels der Muting-Steuereinheit das Muting für ein bestimmtes Muting-Zeitintervall aufrechterhalten, so dass das zulässige Objekt den Lichtvorhang passieren kann, ohne dass der Lichtvorhang das Sicherheitssignal generiert.

Generell sind hierzu Mittel zur Erfassung des zulässigen Objekts vorgesehen.

Gemäß einer ersten Variante sind Muting-Sensoren zur Erfassung zulässiger Objekte vorgesehen.

Alternativ oder zusätzlich ist der Lichtvorhang zur Erfassung zulässiger Objekte ausgebildet.

In der Muting-Steuereinheit wird durch Erkennen eines zulässigen Objekts ein Muting-Timer gestartet, der die Dauer des Muting-Zeitintervalls vorgibt.

Bei einem unvorhergesehenen Stopp der Transporteinrichtung kann ein zulässiges Objekt so lange im Überwachungsbereich des Lichtvorhangs verbleiben, bis das Muting-Zeitintervall abgelaufen ist. Die Stummschaltung des Lichtvorhangs würde dann aufgehoben und der Lichtvorhang würde, da durch das zulässige Objekt Strahlachsen des Lichtvorhangs unterbrochen werden, das Sicherheitssignal generieren, was zu einem unnötigen Abschalten der Maschine führen würde.

Um derartige Fehlfunktionen zu vermeiden, sind erfindungsgemäß Steuermittel vorgesehen, die ein Steuersignal dann generieren, wenn die Transporteinrichtung gestoppt wird oder ein vergleichbarer Störfall vorliegt.

Mit dem Steuersignal wird einerseits der Muting-Timer angehalten, so dass gewährleistet ist, dass der Muting-Zyklus ohne vorzeitigen Abbruch weiter abläuft.

Zudem bewirkt das Steuersignal, dass der Lichtvorhang die aktuell vorhandenen Zustände der Strahlachsen (unterbrochen oder nicht unterbrochen) als Blanking-Muster einlernt. Wenn im Überwachungsbereich ein zulässiges Objekt vorhanden ist und einige der Strahlachsen unterbricht, werden genau die dabei erhaltenen Zustände der Strahlachsen des Lichtvorhangs als Blanking-Muster eingelernt.

Nachfolgend wird, solange der Muting-Timer angehalten ist, das eingelernte Blanking-Muster mit den aktuell erhaltenen Zuständen der Strahlachsen verglichen. Wird für wenigstens eine Strahlachse eine Abweichung vom Blanking-Muster registriert, generiert der Lichtvorhang das Sicherheitssignal, das zum Abschalten der Maschine führt.

Mit dieser erfindungsgemäßen Muting-Steuerung werden mit hoher Sicherheit Manipulationen aufgedeckt und verhindert, wenn das Ablaufen des Muting-Zeitintervalls durch das Steuersignal unterbrochen ist.

Versucht beispielsweise eine Person Zugang zum Gefahrenbereich dadurch zu erlangen, dass sie über das zulässige Objekt während des Stillstands der Transporteinrichtung klettert, wird dies vom Lichtvorhang sofort durch eine Abweichung der Zustände der Strahlachsen vom Blanking-Muster erkannt, so dass dann die Maschine abgeschaltet wird.

Ein Stopp der Transporteinrichtung oder ein vergleichbarer Störfall führt somit nicht zu einem unsicheren, gefahrbringenden Zustand.

Vorteilhaft wird im Lichtvorhang ein Vergleich des aktuellen Status der Strahlachsen mit dem Blanking-Muster nur so lange durchgeführt, wie der Muting-Timer angehalten ist, d. h. die Sicherungsfunktion anhand des Blanking-Musters erfolgt so lange, wie die externe Störung, insbesondere der Stopp der Transporteinrichtung vorliegt, so dass mit dem Blanking-Muster gezielt eine Störfallüberwachung realisiert wird.

Vorteilhaft ist mit den Steuermitteln das Anhalten des Muting-Timers durch Aufheben des Steuersignales aufhebbar.

Dabei wird bei Aufheben des Anhaltens des Muting-Timers das Blanking-Muster im Lichtvorhang gelöscht.

Nach dieser Aufhebung läuft das Muting bis zum Ende des Muting-Zeitintervalls weiter. Nach Aufheben des Steuersignals wird durch das Löschen des Blanking-Musters das reguläre Muting fortgesetzt, d. h. der Lichtvorhang ist wieder wie am Anfang des Muting-Zeitintervalls stummgeschaltet.

Dabei können bei einer Stummschaltung des Lichtvorhangs alle oder ein Teil der Strahlachsen stummgeschaltet sein, wobei nur bei einem Objekteingriff in stummgeschaltete Strahlachsen kein Sicherheitssignal generiert wird.

Während bei der ersten Variante der gesamte Lichtvorhang gemutet, d. h. stummgeschaltet ist, wird bei der zweiten Variante, dem sogenannten partiellen Muting, nur ein Teil der Strahlachsen des Lichtvorhangs gemutet, d. h. der verbleibende Teil der Strahlachsen des Lichtvorhangs bleibt als Sicherheitseinrichtung aktiv, so dass eine Registrierung eines Objekteingriffs in diesen Strahlachsen zur Generierung des Sicherheitssignals führt.

Mit einem derartigen partiellen Muting kann bereits ein erster Manipulationsschutz erzielt werden. Werden beispielsweise auf der Transporteinrichtung zulässige Objekte transportiert, deren maximale Höhe kleiner als die Höhe des Lichtvorhangs ist, so kann ein partielles Muting derart durchgeführt werden, dass die Strahlachsen des Lichtvorhangs, die oberhalb der maximalen Höhe der zulässigen Objekte liegen, vom Muting ausgenommen werden, so dass dort fortlaufend sicherheitskritische Objekte erfasst werden können.

Dieser Manipulationsschutz ist naturgemäß unvollständig, da für zulässige Objekte, deren Höhe kleiner als die maximale Höhe ist, stets eine Manipulationsgefahr verbleibt, die erst mit der erfindungsgemäßen Muting-Steuerung gebannt wird.

Gemäß einer vorteilhaften Ausgestaltung erfolgt das Einlernen des Blanking-Musters um ein vorgegebenes Zeitintervall verzögert gegenüber dem Steuersignal.

Hierbei wird dem Umstand Rechnung getragen, dass nach Generierung des Stummsignals und damit nach dem Stopp der Transporteinrichtung diese noch auslaufen kann. Um dieses Auslaufen der Transporteinrichtung zu berücksichtigen, wird das Blanking-Muster erst nach dem vorgegebenen Zeitintervall, das typischerweise etwa zwei Sekunden beträgt, eingelernt, da dann sichergestellt ist, dass die Transporteinrichtung auch tatsächlich stillsteht.

Gemäß einer weiteren vorteilhaften Ausführungsform ist das Blanking-Muster mit vorgegebenen Strahlachsen-Toleranzen eingelernt.

Dabei wird vorteilhaft an den Objektgrenzen eines im Überwachungsbereich des Lichtvorhangs befindlichen Objekts eine Toleranz von ein oder zwei Strahlachsen zugelassen bzw. vorgegeben, damit eine Unempfindlichkeit gegenüber Schwankungen der Objektposition erhalten wird.

Gemäß einer weiteren zweckmäßigen Ausgestaltung ist der Vergleich des aktuellen Status der Strahlachsen mit dem Blanking-Muster mit einer reduzierten Auflösung durchgeführt.

Bei einer reduzierten Auflösung wird für eine Objekterkennung die Unterbrechung mehrerer zusammenhängender Strahlachsen gefordert, so dass nur Objekte mit einer vorgegebenen Mindestgröße erfasst werden.

Vorteilhaft ist das Steuermittel Bestandteil der Muting-Steuereinheit.

Die Muting-Steuereinheit kann vorteilhaft Bestandteil der Sicherheitssteuerung oder des Lichtvorhangs sein.

Die Erfindung wird im Folgenden anhand der Zeichnungen erläutert. Es zeigen:
- Figur 1:: Ausführungsbeispiel der erfindungsgemäßen Vorrichtung in einer Seitenansicht.
- Figur 2:: Vorrichtung gemäß Figur 1.
- Figur 3:: Einzeldarstellung eines Lichtvorhangs für die Vorrichtung der Figuren 1 und 2.
- Figur 4:: Blanking-Muster für den Lichtvorhang gemäß Figur 3
- Figur 5:: Abweichung vom Blanking-Muster gemäß Figur 3.

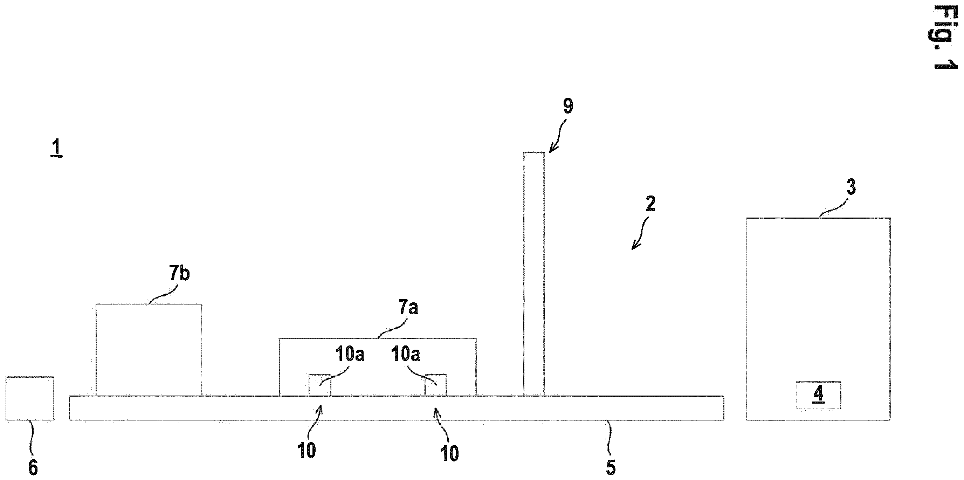

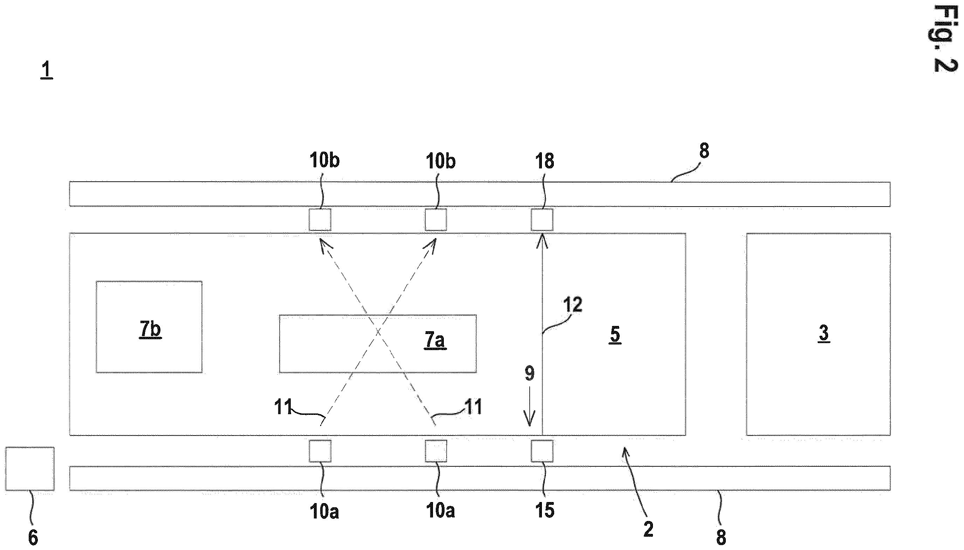

Die Figuren 1 und 2 zeigen ein Ausführungsbeispiel der erfindungsgemäßen Vorrichtung 1 zur Sicherung eines Gefahrenbereichs 2 an einer Maschine 3. Die Maschine 3, die von einer Sicherheitssteuerung 4 mit einem fehlersicheren Aufbau gesteuert wird, kann generell auch von einer sonstigen Anlage gebildet sein. Im Gefahrenbereich 2 im Vorfeld der Maschine 3 können durch deren Arbeitsbewegungen Gefahren für Personen auftreten.

Der Maschine 3 ist eine Transporteinrichtung 5 in Form eines Förderbands oder dergleichen zugeordnet, die von einer Prozess-Steuerung 6 gesteuert wird. Auf der Transporteinrichtung 5 werden mit einer vorgegebenen Fördergeschwindigkeit zulässige Objekte 7a, 7b, beispielsweise in Form von zu bearbeitenden Werkstücken, die auf Paletten gelagert sind, der Maschine 3 zugeführt.

Um einen unbefugten Zutritt zum Gefahrenbereich 2 zu verhindern ist die Transporteinrichtung 5 seitlich mit einer Umzäunung 8 gesichert.

Der Zugang zum Gefahrenbereich 2 über die Transporteinrichtung 5 wird über einen Lichtvorhang 9 abgesichert.

In Transportrichtung der Transporteinrichtung 5 sind dem Lichtvorhang 9 zwei Muting-Sensoren 10 vorgeordnet, die jeweils von einer Lichtschranke gebildet sind, ein Sendelichtstrahlen 11 emittierendes Sendeelement 10a und ein zugeordnetes Empfangselement 10b aufweisen. Die Sendelichtstrahlen verlaufen gekreuzt. Prinzipiell kann auch der Lichtvorhang 9 selbst die Funktion eines Muting-Sensors 10 übernehmen.

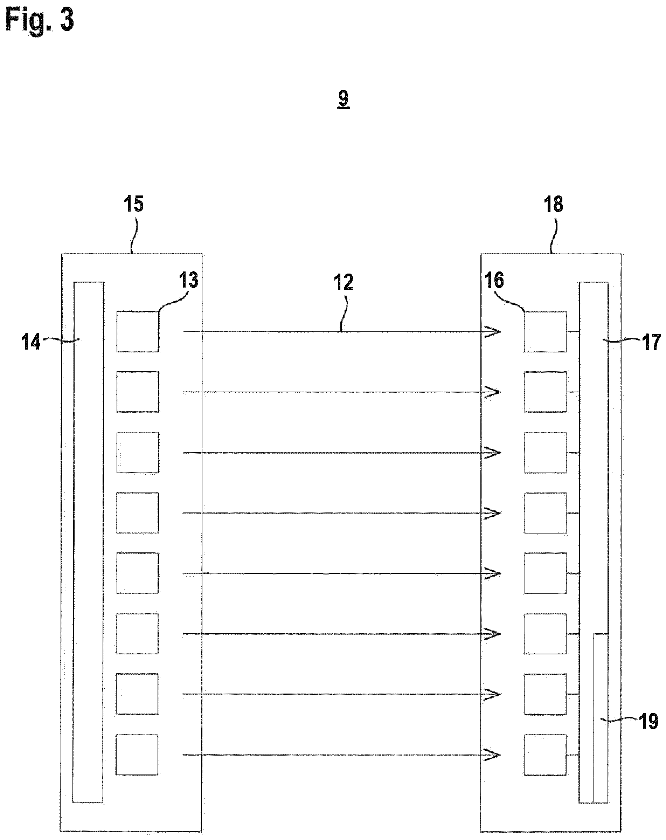

Figur 3 zeigt schematisch den Aufbau eines Lichtvorhangs 9, welcher zur Erfassung von Objekten 7a, 7b in einem Überwachungsbereich dient. Der Lichtvorhang 9 umfasst eine Anordnung von Lichtstrahlen 12 emittierenden Sendern 13, die mit einer Sender-Steuereinheit 14 zyklisch einzeln nacheinander aktiviert werden. Die Sender 13 und die Sender-Steuereinheit 14 sind in einem ersten Gehäuse 15 integriert. Der Lichtvorhang 9 umfasst weiter eine Anordnung von Empfängern 16 zum Empfang der Lichtstrahlen 12. Den Empfängern 16 ist eine Auswerteeinheit 17 zur Steuerung des Empfängerbetriebs und zur Auswertung der an den Ausgängen anstehenden Empfangssignale zugeordnet. Die Empfänger 16 und die Auswerteeinheit 17 sind in einem zweiten Gehäuse 18 integriert. Die Lichtstrahlen 12 werden durch nicht dargestellte Fenster in den Frontwänden der Gehäuse 15, 18 geführt. Wie aus Figur 3 ersichtlich, sind die Sender 13 und die Empfänger 16 in separaten Gehäusen 15, 18 an gegenüberliegenden Rändern des Überwachungsbereichs angeordnet. Dabei bilden die Sender 13 und Empfänger 16 Sender-Empfänger-Paare, wobei jedem Sender 13 jeweils ein Empfänger 16 zugeordnet ist, so dass bei freiem Überwachungsbereich die vom Sender 13 emittierten Lichtstrahlen 12 als Empfangslichtstrahlen auf den Empfänger 16 treffen.

Jeweils ein Sender 13 und der zugeordnete Empfänger 16 definieren eine Strahlachse des Lichtvorhangs 9, wobei die Richtung der Strahlachse durch die Lichtstrahlen 12 des jeweiligen Senders 13 gegeben ist. Die in einer Ebene liegenden Strahlachsen des Lichtvorhangs 9 bilden den Überwachungsbereich. Bei einem Objekteingriff in den Überwachungsbereich wird der Strahlengang der Lichtstrahlen 12 wenigstens eines Senders 13, das heißt wenigstens eine Strahlachse unterbrochen.

Im vorliegenden Fall weist der Lichtvorhang 9 acht Strahlachsen auf, was natürlich nicht zwingend ist.

Alternativ zu der Ausführungsform gemäß Figur 3 können die Sender 13 und Empfänger 16 auch in einem gemeinsamen Gehäuse 15 integriert sein, welches an einem Rand des Überwachungsbereichs angeordnet ist. Am gegenüberliegenden Rand des Überwachungsbereichs ist dann ein Reflektor angeordnet, wobei bei freiem Überwachungsbereich die von den Sendern 13 emittierten Lichtstrahlen 12 am Reflektor reflektiert und dort auf die Empfänger 16 geführt sind.

In Abhängigkeit der Empfängersignale der Empfänger 16 wird in der Auswerteeinheit 17 als Objektfeststellungssignal ein binäres Schaltsignal generiert, dessen Schaltzustände angeben, ob sich ein Objekt 7a, 7b im Überwachungsbereich befindet oder nicht. Das Schaltsignal nimmt den Schaltzustand "freier Überwachungsbereich" ein, wenn keine der Lichtstrahlen 12 unterbrochen sind. Werden dagegen wenigstens die Lichtstrahlen 12 eines Senders 13 unterbrochen, nimmt das Schaltsignal den Schaltzustand "Objekt vorhanden" ein, das heißt es liegt ein Objekteingriff im Überwachungsbereich vor. Der Lichtvorhang 9 wird im vorliegenden Fall im Bereich des Personenschutzes eingesetzt. Um eine hierfür erforderliche fehlersichere Auswertung der Empfangssignale zu erzielen, weist die Auswerteeinheit 17 einen redundanten, zweikanaligen Aufbau auf. Vorzugsweise weist die Auswerteeinheit 17 zwei sich gegenseitig zyklisch überwachende Rechnereinheiten auf.

Wie Figur 2 zeigt, sind die Gehäuse 15, 18 dem Lichtvorhang 9 beidseits der Transporteinrichtung 5 gegenüberliegend angeordnet, wobei die Lichtstrahlen 12 des Lichtvorhangs 9 quer zur Transportrichtung der Transporteinrichtung 5 verlaufen.

Der Lichtvorhang 9 erfüllt eine Sicherheitsfunktion derart, dass dann, wenn mit diesem ein Objekt 7a, 7b im Überwachungsbereich erkannt wird, das Schaltsignal mit Schaltzustand "Objekt vorhanden" als Sicherheitssignal in die Sicherheitssteuerung 4 eingelesen wird, wodurch die Sicherheitssteuerung 4 die Maschine 3 abschaltet, so dass von dieser keine Gefahren mehr ausgehen.

Um ein unnötiges Abschalten der Maschine 3 dann zu vermeiden, wenn die zulässigen Objekte 7a, 7b den Lichtvorhang 9 passieren, ist eine Muting-Steuereinheit 19 vorgesehen, die im Lichtvorhang 9 integriert ist. Alternativ kann die Muting-Steuereinheit 19 auch in der Sicherheitssteuerung 4 integriert sein.

Mit den Muting-Sensoren 10 wird ein zulässiges Objekt 7a, 7b anhand der zeitlichen Abfolge der Strahlunterbrechung der Muting-Sensoren 10 erkannt. Diese Muting-Signale werden in der Muting-Steuereinheit 19 derart ausgewertet, dass ein Stummschalten, d. h. Muting des Lichtvorhangs 9 initiiert wird. Dabei werden alle Strahlachsen stummgeschaltet. Prinzipiell kann auch nur ein Teil der Strahlachsen des Lichtvorhangs 9 gemutet werden.

Der stummgeschaltete Lichtvorhang 9 generiert kein Sicherheitssignal, und zwar auch dann nicht, wenn ein Objekteingriff mit dem Lichtvorhang 9 registriert ist.

Das Muting des Lichtvorhangs 9 bleibt für ein Muting-Zeitintervall aktiv. Das Muting-Zeitintervall startet mit Erkennen des jeweiligen zulässigen Objekts 7a, 7b. Bei Start des Muting-Zeitintervalls wird ein Muting-Timer gestartet, der die Dauer des Muting-Zeitintervalls vorgibt. Das Muting-Zeitintervall ist an die zulässigen Objekte 7a, 7b und die Fördergeschwindigkeit der Transporteinrichtung 5 so angepasst, dass das zulässige Objekt 7a, 7b während des Muting-Zeitintervalls passieren kann.

Erfindungsgemäß sind Steuermittel vorgesehen, die im vorliegenden Fall Bestandteil der Muting-Steuereinheit 19 sind. Die Steuermittel generieren dann, wenn z. B. aufgrund einer Störung die Transporteinrichtung 5 angehalten wird, ein Steuersignal.

Mit dem Steuersignal wird zunächst der Ablauf des Muting-Zeitintervalls dadurch gehemmt, indem der Muting-Timer angehalten wird.

Weiterhin werden mit dem Steuersignal eine Erfassung und ein Einlernen eines Blanking-Musters des Lichtvorhangs 9 initiiert. Das Blanking-Muster kann sofort mit Generieren des Steuersignals generiert werden. Alternativ wird das Blanking-Muster erst nach Ablauf eines Zeitintervalls, das typischerweise etwa zwei Sekunden dauert, eingelernt. Damit wird berücksichtigt, dass die Transporteinrichtung 5 nach einem Stopp-Befehl noch etwas nachlaufen kann.

Das Blanking-Muster ist vom aktuellen Iststand der Strahlachsen (unterbrochen oder nicht unterbrochen) gebildet.

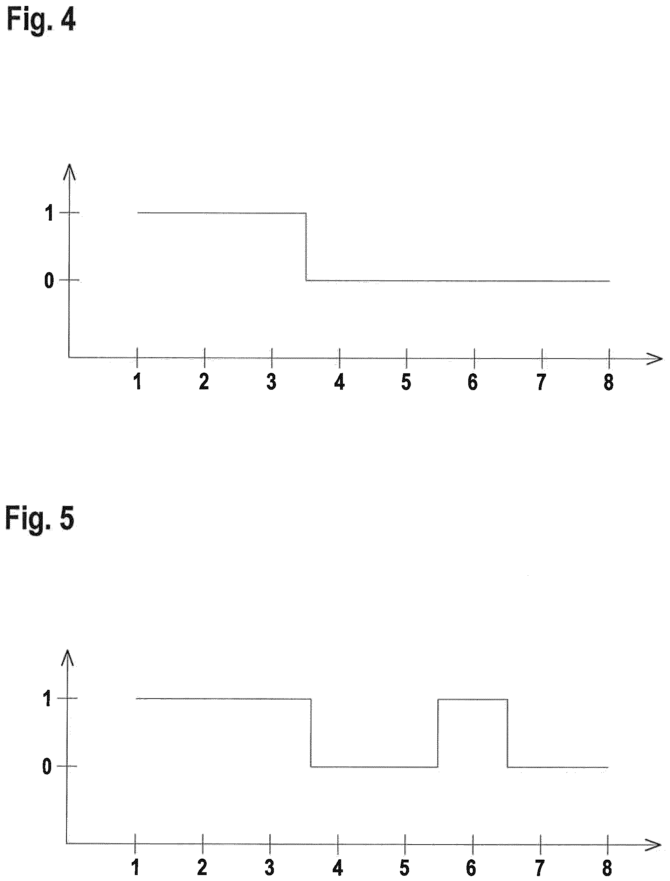

Figur 4 zeigt das nach dem Steuersignal aufgenommene Blanking-Muster des Lichtvorhangs 9 für den Fall, dass sich das zulässige Objekt 7a im Strahlengang des Lichtvorhangs 9 befindet. Demzufolge ergibt sich das Blanking-Muster derart, dass die unteren drei Strahlachsen unterbrochen sind (Zustand 1) und die oberen Strahlachsen nicht unterbrochen sind (Zustand 0).

Sobald das Blanking-Muster eingelernt wurde wird im Lichtvorhang 9 das aktuelle Muster der Zustände der Strahlachsen mit dem eingelernten Blanking-Muster verglichen. Stimmt das aktuelle Muster mit dem Blanking-Muster überein, wird im Lichtvorhang 9 kein Sicherheitssignal generiert.

Wird jedoch, wie beispielsweise Figur 5 zeigt, ein aktuelles Muster im Lichtvorhang 9 registriert, das von dem eingebauten Blanking-Muster (Figur 4) abweicht, so wird im Lichtvorhang 9 das Sicherheitssignal generiert, wodurch die Maschine 3 abgeschaltet wird.

Damit wird ein effizienter Manipulationsschutz während des Stillstands der Transporteinrichtung 5 erhalten, da durch den Vergleich des aktuellen Musters der Strahlachsen mit dem Blanking-Muster im Lichtvorhang 9 überwacht wird, ob außer dem im Überwachungsbereich des Lichtvorhangs 9 befindlichen unkritischen zulässigen Objekt 7a noch weitere Objekteingriffe erfolgen, die vom Blanking-Muster mit den zulässigen Objekten 7a, 7b abweichen und daher als sicherheitskritisch klassifiziert werden.

Diese Manipulationsüberwachung erfolgt so lange, wie der Muting-Timer durch das Steuersignal angehalten ist und damit so lange wie die Transporteinrichtung 5 stillsteht. Nimmt die Transporteinrichtung 5 ihren regulären Arbeitsbetrieb auf, d. h. bewegt sich die Transporteinrichtung 5 wieder mit der Fördergeschwindigkeit, so wird das Steuersignal aufgehoben, wodurch der Muting-Timer weiterläuft und damit der Muting-Zeitintervall weiter abläuft. Mit Aufheben des Steuersignals wird das Blanking-Muster gelöscht und der Lichtvorhang 9 ist wieder, wie am Anfang des Muting-Zeitintervalls, stummgeschaltet, und zwar so lange, bis das Muting-Zeitintervall abgelaufen ist.

### Bezugszeichenliste

- (1): Vorrichtung
- (2): Gefahrenbereich
- (3): Maschine
- (4): Sicherheitssteuerung
- (5): Transporteinrichtung
- (6): Prozess-Steuerung
- (7a): zulässiges Objekt
- (7b): zulässiges Objekt
- (8): Umzäunung
- (9): Lichtvorhang
- (10): Muting-Sensoren
- (10a): Sendeelement
- (10b): Empfangselement
- (11): Sendelichtstrahlen
- (12): Lichtstrahlen
- (13): Sender
- (14): Sender-Steuereinheit
- (15): Gehäuse
- (16): Empfänger
- (17): Auswerteeinheit
- (18): Gehäuse
- (19): Muting-Steuereinheit

## Patentansprüche

1. Vorrichtung (1) zur Sicherung eines Gefahrenbereichs (2) mit einem Lichtvorhang (9), umfassend eine Anzahl von Strahlachsen ausbildenden Sender-Empfänger-Paaren mit jeweils einem Lichtstrahlen (12) emittierenden Sender (13) und einem Lichtstrahlen (12) empfangenden Empfänger (16) sowie eine Auswerteeinheit (17), in welcher bei Unterbrechung wenigstens einer Strahlachse ein Sicherheitssignal generierbar ist und mit einer Muting-Steuereinheit (19), mittels derer ein Stummschalten des Lichtvorhangs (9) derart durchführbar ist, dass während eines durch einen Muting-Timer vorgegebenen Muting-Zeitinterwalls ein zulässiges Objekt (7a, 7b) den Lichtvorhang (9) passieren kann ohne dass dieser das Sicherheitssignal generiert, **dadurch gekennzeichnet, dass** Steuermittel vorgesehen sind, mittels derer ein Steuersignal generierbar ist, mittels dessen der Muting-Timer angehalten ist und mittels dessen ein Einlernen eines Blanking-Musters im Lichtvorhang (9) initiiert ist, welches für alle Strahlachsen den aktuellen Status angibt, ob diese unterbrochen sind oder nicht, und dass nachfolgend im Lichtvorhang (9) ein Sicherheitssignal generiert wird, falls für wenigstens eine Strahlachse eine Abweichung von dem Blanking-Muster registriert wird.

2. Vorrichtung (1) nach Anspruch 1, **dadurch gekennzeichnet, dass** im Lichtvorhang (9) ein Vergleich des aktuellen Status der Strahlachsen mit dem Blanking-Muster nur so lange durchgeführt wird, wie der Muting-Timer angehalten ist.

3. Vorrichtung (1) nach Anspruch 2, **dadurch gekennzeichnet, dass** mit den Steuermitteln das Anhalten des Muting-Timers durch Aufheben des Steuersignales aufhebbar ist.

4. Vorrichtung (1) nach Anspruch 3, **dadurch gekennzeichnet, dass** bei Aufheben des Anhaltens des Muting-Timers das Blanking-Muster im Lichtvorhang (9) gelöscht wird.

5. Vorrichtung (1) nach einem der Ansprüche 1 bis 4, **dadurch gekennzeichnet, dass** das Einlernen des Blanking-Musters um ein vorgegebenes Zeitintervall verzögert gegenüber dem Steuersignal erfolgt.

6. Vorrichtung (1) nach einem der Ansprüche 1 bis 5, **dadurch gekennzeichnet, dass** das Blanking-Muster mit vorgegebenen Strahlachsen-Toleranzen eingelernt ist.

7. Vorrichtung (1) nach einem der Ansprüche 1 bis 6, **dadurch gekennzeichnet, dass** der Vergleich des aktuellen Status der Strahlachsen mit dem Blanking-Muster mit einer reduzierten Auflösung durchgeführt ist.

8. Vorrichtung (1) nach einem der Ansprüche 1 bis 7, **dadurch gekennzeichnet, dass** das Steuermittel Bestandteil der Muting-Steuereinheit (19) ist.

9. Vorrichtung (1) nach Anspruch 8, **dadurch gekennzeichnet, dass** bei Einlesen des Sicherheitssignals des Lichtvorhangs (9) in die Sicherheitssteuerung (4) diese einen Abschaltbefehl für eine gefahrbringende Anlage generiert.

10. Vorrichtung (1) nach einem der Ansprüche 1 bis 9, **dadurch gekennzeichnet, dass** der Lichtvorhang (9) ein Sicherheitssensor ist.

11. Vorrichtung (1) nach einem der Ansprüche 1 bis 10, **dadurch gekennzeichnet, dass** die Muting-Steuereinheit (19) Bestandteil des Lichtvorhangs (9) oder Bestandteil der Sicherheitssteuerung (4) ist.

12. Vorrichtung (1) nach einem der Ansprüche 1 bis 11, **dadurch gekennzeichnet, dass** bei einer Stummschaltung des Lichtvorhangs (9) alle oder ein Teil der Strahlachsen stummgeschaltet sind, wobei nur bei einem Objekteingriff in stummgeschaltete Strahlachsen kein Sicherheitssignal generiert wird.

13. Vorrichtung (1) nach einem der Ansprüche 1 bis 12, **dadurch gekennzeichnet, dass** mittels der Muting-Steuereinheit (19) bei Erfassen eines zulässigen Objekts (7a, 7b) der Lichtvorhang (9) stummgeschaltet ist.

14. Vorrichtung (1) nach Anspruch 13, **dadurch gekennzeichnet, dass** Muting-Sensoren (10) zur Erfassung zulässiger Objekte (7a, 7b) vorgesehen sind, oder dass der Lichtvorhang (9) zur Erfassung zulässiger Objekte (7a, 7b) ausgebildet ist.

15. Vorrichtung (1) nach einem der Ansprüche 13 bis 14, **dadurch gekennzeichnet, dass** zulässige Objekte (7a, 7b) auf einer Transporteinrichtung (5) mit einer Fördergeschwindigkeit gefördert sind, wobei die Steuermittel das Steuersignal bei einem Stopp der Transporteinrichtung (5) generieren.

16. Vorrichtung (1) nach Anspruch 15, **dadurch gekennzeichnet, dass** bei einem Wiederanlauf der Transporteinrichtung (5) das Steuersignal durch die Steuermittel aufgehoben ist.

## Claims

1. A device (1) for securing a dangerous area (2) with a light curtain (9), comprising a number of transmitter-receiver pairs forming beam axes, each with a transmitter (13) emitting light beams (12) and a receiver (16) receiving light beams (12), and an evaluation unit (17), in which a safety signal can be generated if at least one beam axis is interrupted, and having a muting control unit (19) by means of which the light curtain (9) can be muted in such a way that, during a muting time interval predetermined by a muting timer, a permissible object (7a, 7b) can pass through the light curtain (9) without the latter generating the safety signal, **characterized in that** control means are provided by means of which a control signal can be generated by means of which the muting timer is stopped and by means of which a blanking pattern is initiated in the light curtain (9), which indicates the current status for all beam axes, whether these are interrupted or not, and **in that** subsequently a safety signal is generated in the light curtain (9) if a deviation from the blanking pattern is registered for at least one beam axis.

2. A device (1) according to claim 1, **characterised in that** a comparison of the current status of the beam axes with the blanking pattern is only carried out in the light curtain (9) as long as the muting timer is stopped.

3. A device (1) according to claim 2, **characterised in that** the stopping of the muting timer can be cancelled by cancelling the control signal with the control means.

4. A device (1) according to claim 3, **characterised in that** the blanking pattern in the light curtain (9) is deleted when the stopping of the muting timer is cancelled.

5. A device (1) according to one of the claims 1 to 4, **characterised in that** the teaching-in of the blanking pattern is delayed by a predetermined time interval with respect to the control signal.

6. A device (1) according to one of the claims 1 to 5, **characterized in that** the blanking pattern is taught with predetermined beam axis tolerances.

7. A device (1) according to any one of claims 1 to 6, **characterised in that** the comparison of the current status of the beam axes with the blanking pattern is carried out with a reduced resolution.

8. A device (1) according to any one of claims 1 to 7, **characterised in that** the control means is part of the muting control unit (19).

9. A device (1) according to claim 8, **characterised in that**, when the safety signal of the light curtain (9) is read into the safety control unit (4), the latter initiates a shutdown command for a hazardous installation.

10. A device (1) according to one of claims 1 to 9, **characterised in that** the light curtain (9) is a safety sensor.

11. A device (1) according to one of claims 1 to 10, **characterised in that** the muting control unit (19) is a component of the light curtain (9) or a component of the safety control (4).

12. A device (1) according to one of the claims 1 to 11, **characterised in that**, when the light curtain (9) is muted, all or some of the beam axes are muted, wherein no safety signal is generated only in the event of an object intervention in muted beam axes.

13. A device (1) according to one of claims 1 to 12, **characterised in that** the light curtain (9) is muted by means of the muting control unit (19) when a permissible object (7a, 7b) is detected.

14. A device (1) according to claim 13, **characterised in that** muting sensors (10) are provided for detecting permissible objects (7a, 7b), or **in that** the light curtain (9) is designed for detecting permissible objects (7a, 7b).

15. A device (1) according to one of the claims 13 to 14, **characterised in that** permissible objects (7a, 7b) are conveyed on a transport device (5) at a conveying speed, the control means generating the control signal when the transport device (5) stops.

16. A device (1) according to claim 15, **characterised in that** the control signal is cancelled by the control means when the transport device (5) restarts.

## Revendications

1. Dispositif (1) de sécurisation d'une zone dangereuse (2) avec un rideau lumineux (9), comprenant un certain nombre de paires d'émetteurs-récepteurs formant des axes de rayonnement, avec respectivement un émetteur (13) émettant des rayons lumineux (12) et un récepteur (16) recevant des rayons lumineux (12), et une unité d'évaluation (17), dans laquelle un signal de sécurité peut être généré si au moins un axe de rayonnement est interrompu, et avec une unité de commande d'inhibition (19) au moyen de laquelle le rideau lumineux (9) peut être inhibé de telle sorte que, pendant un intervalle de temps d'inhibition prédéterminé par une minuterie d'inhibition, un objet autorisé (7a, 7b) puisse traverser le rideau lumineux (9) sans que celui-ci ne génère le signal de sécurité, **caractérisé en ce qu'**il est prévu des moyens de commande permettant de générer un signal de commande par lequel la minuterie d'inhibition est arrêtée et par lequel un modèle de suppression est initié dans le rideau lumineux (9), lequel indique l'état actuel pour tous les axes de faisceau, que ceux-ci soient interrompus ou non, et **en ce qu'**ensuite un signal de sécurité est généré dans le rideau lumineux (9) si un écart par rapport au modèle de suppression est enregistré pour au moins un axe de faisceau.

2. Dispositif (1) selon la revendication 1, **caractérisé en ce qu'**une comparaison de l'état actuel des axes du faisceau avec le modèle de suppression n'est effectuée dans le rideau lumineux (9) que tant que la minuterie d'inhibition est arrêtée.

3. Dispositif (1) selon la revendication 2, **caractérisé en ce que** l'arrêt de la minuterie d'inhibition peut être annulé en annulant le signal de commande avec les moyens de commande.

4. Dispositif (1) selon la revendication 3, **caractérisé en ce que** le motif d'effacement dans le rideau lumineux (9) est supprimé lorsque l'arrêt de la minuterie d'inhibition est annulé.

5. Dispositif (1) selon l'une des revendications 1 à 4, **caractérisé en ce que** l'apprentissage du motif d'effacement est retardé d'un intervalle de temps prédéterminé par rapport au signal de commande.

6. Dispositif (1) selon l'une des revendications 1 à 5, **caractérisé en ce que** l'apprentissage du motif d'occultation est effectué avec des tolérances d'axe de faisceau prédéterminées.

7. Dispositif (1) selon l'une des revendications 1 à 6, **caractérisé en ce que** la comparaison de l'état actuel des axes du faisceau avec le motif de suppression est effectuée avec une résolution réduite.

8. Dispositif (1) selon l'une quelconque des revendications 1 à 7, **caractérisé en ce que** le moyen de commande fait partie de l'unité de commande de muting (19).

9. Dispositif (1) selon la revendication 8, **caractérisé en ce que**, lorsque le signal de sécurité du rideau lumineux (9) est lu dans l'unité de commande de sécurité (4), cette dernière lance une commande d'arrêt d'une installation dangereuse.

10. Dispositif (1) selon l'une des revendications 1 à 9, **caractérisé en ce que** le rideau lumineux (9) est un capteur de sécurité.

11. Dispositif (1) selon l'une des revendications 1 à 10, **caractérisé en ce que** l'unité de commande d'inhibition (19) est un composant du rideau lumineux (9) ou un composant de la commande de sécurité (4).

12. Dispositif (1) selon l'une des revendications 1 à 11, **caractérisé en ce que**, lorsque le rideau lumineux (9) est muet, tout ou partie des axes de faisceau sont muets, aucun signal de sécurité n'étant généré uniquement en cas d'intervention d'un objet dans les axes de faisceau muets.

13. Dispositif (1) selon l'une des revendications 1 à 12, **caractérisé en ce que** le rideau lumineux (9) est mis en sourdine au moyen de l'unité de commande de mise en sourdine (19) lorsqu'un objet admissible (7a, 7b) est détecté.

14. Dispositif (1) selon la revendication 13, **caractérisé en ce que** des capteurs d'inhibition (10) sont prévus pour détecter des objets admissibles (7a, 7b), ou **en ce que** le rideau lumineux (9) est conçu pour détecter des objets admissibles (7a, 7b).

15. Dispositif (1) selon l'une des revendications 13 à 14, **caractérisé en ce que** les objets autorisés (7a, 7b) sont transportés sur un dispositif de transport (5) à une vitesse de transport, le moyen de commande générant le signal de commande lorsque le dispositif de transport (5) s'arrête.

16. Dispositif (1) selon la revendication 15, **caractérisé en ce que** le signal de commande est inhibé par les moyens de commande lorsque le dispositif de transport (5) redémarre.
